# EUROPEAN PATENT APPLICATION

(11) **EP 2 548 442 A1**
(43) Date of publication of application: **23.01.2013**
(21) Application number: 12460039.6
(22) Date of filing: 09.07.2012
(51) Int. Cl.: A21D 8/04, A21D 13/06

(54) **Method of producing gluten-free bread with transglutaminase**

(30) Priority: 20.07.2011 PL 39571411
(71) Applicant: P.M.T. Trading SP. Z O.O., 90-616 Lodz (PL)
(72) Inventor: Diowksz, Anna, 91 - 214 Lodz (PL); Ambroziak, Wojciech, 91 - 473 Lodz (PL); Kordialik, Edyta, 95 - 100 Zgierz (PL)
(74) Representative: Dziubinska, Jolanta

(57) **Abstract**

The subject of the invention is a method of producing gluten-free bread on yeast or sourdough meant especially for people who are on a gluten-free diet and having digestion problems.

The process of preparing gluten-free bread in yeast or sourdough technology is that the dough is prepared using a gluten-free mixture with the addition of transglutaminase of bacterial origin in an amount of 3 to 99 mg/100 g, with the use of other baking additives and used transglutaminose corresponds to the enzyme dose below 100U/kg of flour.

## Description

The subject of the invention is a method of producing gluten-free bread, on yeast or sourdough meant especially for people who are on a gluten-free diet and having digestion problems.

Gluten-free bread is a product intended for people who are on a rigorous diet due to gluten intolerance by persons with hypersensitivity to this protein component of the basic cereals such as: wheat, rye and barley. The production of gluten-free bread causes many difficulties resulting from poor baking quality of used raw materials caused by the lack of gluten proteins responsible for the visco-elastic and visco-plastic characteristics of dough. Obtaining the dough from gluten free raw materials that would be similar to the dough made from traditional ingredients requires using structure-building additives. This role is usually performed by hydrocolloids such as guar gum or cellulose derivatives. There is known method of production of oat gluten-free bread according to the Polish Patent Application No. P 392 299. In this application from a mixture of whole grain oat flour and wheat starch used in equal parts bread is prepared with baker's yeast and the addition of guar gum as well as other typical components of bread.

There is known use of transglutaminase, an enzyme from transferase group, which catalyzes the reactions of attaching amino acids and peptides to proteins. This property is used in the case of wheat dough to strengthen the gluten network, especially in the case of frozen dough.

Transglutaminase is an enzyme which is deactivated by heating for several minutes in temp. 70° C.

In the case of gluten-free dough different nature of proteins does not allow for the formation of a gluten network.

The aim of the invention is a method of producing bread from gluten-free mixtures. The production process of gluten-free bakery products on yeast or sourdough, according to the invention, is that the dough is prepared using a gluten-free mixture with the addition of transglutaminase in an amount of 3 to 99 mg/100g, with the use of other baking additives and used transglutaminose corresponds to the enzyme dose below 100U/kg of flour mixture.

Bread is made from gluten-free flour mixtures e.g. oat flour, buckwheat flour, corn flour, starch used in different proportions.

Gluten-free bread according to the invention can be prepared by yeast fermentation or on sourdough.

This bread can also be made without the structure forming additives using greater amount of transglutaminase.

According to the invention, the use of transglutaminase of bacterial origin as one of the ingredients of a bakery product recipe results in strengthening the dough and makes it easy to get gluten-free bread of crumb structure similar to that of a traditional product. At the same time it was found that the addition of transglutaminase to a large extent eliminates the bitter taste of gluten-free products manufactured from raw materials rich in polyphenolic compounds.

Bread according to the invention is characterized by uniform porosity, good elasticity of the crumb, limited crushing.

The subject of the invention is illustrated in the examples of the production of gluten-free oat bread from which the first and second relate to the process of preparing gluten-free oat bread on yeast, while the third example refers to oat gluten-free bread made on sourdough.

The following examples are intended to clarify the invention better, but they do not limit its range in any way.

### Example I.

To prepare the dough from 100 kg of flour mixture (50 kg of oat flour and 50 kg of wheat starch), designed for the production of gluten-free oat bread on yeast, the following ingredients were used:
- 50 kg of whole grain oat flour,
- 50 kg of wheat starch
- 15g of transglutaminase
- 2 kg of guar gum,
- 2 kg of sugar (sucrose),
- 2 kg of salt,
- 5 kg of compressed baker's yeast
- 70 liters of water.

To the flour mixture there were added transglutaminase of bacterial origin and guar gum in powder form as well as salt and sugar in the form of solution and yeast in suspension. To prepare solutions and suspension water was added in the amount provided in the recipe. Kneading was continued for 20 minutes, then the dough was placed in a proof chamber for 40 minutes in temp. 30°C. After this time the cake was kneaded again for 5 minutes, and then divided into 400 g pieces and placed in molds smeared with oil. After 20 minutes leavening at 30°C molds with the dough were transferred to an oven preheated to 220°C. Immediately after closing the oven, steam supply to the baking oven was switched on for a few seconds. After 5 minutes the temperature was reduced to 180°C. Total baking time amounted to 40 minutes.

### Example II.

To prepare the dough from 100 kg of flour mixture (50 kg of oat flour and 50 kg of wheat starch) to get the gluten-free oat bread on yeast the following ingredients were used:
- 50 kg of whole grain oat flour,
- 50 kg of wheat starch
- 99g of transglutaminase
- 2 kg of sugar (sucrose),
- 2 kg of salt,
- 5 kg of compressed baker's yeast
- 70 liters of water.

To the flour mixture there were added transglutaminase in powder form as well as salt and sugar in the form of solution and yeast in suspension. To prepare solutions and suspension water was added in the amount provided in the recipe. Dough was prepared according to the known method in the temperature approx. 180°C for approx. 40 minutes.

### Example III.

To prepare the dough from 100 kg of flour mixture (50 kg of oat flour and 50 kg of wheat starch) to get the gluten-free oat bread on sourdough, was used:
- 36 kg oat sourdough,
- 30 kg of whole grain oat flour,
- 50 kg of wheat starch
- 5g of transglutaminase
- 3 kg of guar gum,
- 2 kg of sugar (sucrose),
- 2 kg of salt,
- 5 kg of compressed baker's yeast
- 54 liters of water.

Oat ourdough was prepared from 20 kg of oat flour and 15 1 of water with the addition of 1 liter of inoculum *Lactobacillus plantarum* and then it was subjected to a 24-h fermentation at 30°C. The inoculum was obtained by inoculating with a strain of *Lactobacillus plantarum* in an amount of 2% of sterile liquid medium MRS (containing in 1 1: 4g yeast extract, 8 g meat extract, 10 g peptone K, 20 g glucose, 2 g triammonium citrate, 2 g dipotassium hydrogen phosphate , 5 g of sodium acetate, 0.2 g of hydrated magnesium sulfate and 0.05 g of tetrahydrate manganese (II) sulfate) and subjected to proliferation at 30° C during 24 hours.

To the flour mixture there were added transglutaminase and guar gum in powder form as well as salt and sugar in the form of solution and yeast in suspension. To prepare solutions and suspension, water was added in the amount provided in the recipe. Proceeding as in example I we get ready-made gluten free bread.

## Claims

1. Method of producing gluten-free bread in the technology on yeast or sourdough, **characterized in that** the dough is prepared using a gluten-free mixture with the addition of transglutaminase of bacterial origin in an amount of 3 to 99 mg/100 g with the use of other baking additives and used transglutaminose corresponds to the enzyme dose below 100U/kg of flour.
